(19) Europäisches Patentamt
European Patent Office
Office européen des brevets

(11) **EP 3 717 097 B1**

(12) **FASCICULE DE BREVET EUROPEEN**

(45) Date de publication et mention de la délivrance du brevet:
**18.05.2022 Bulletin 2022/20**

(21) Numéro de dépôt: **18795684.2**

(22) Date de dépôt: **06.11.2018**

(51) Classification Internationale des Brevets (IPC):
**B01D 33/04** *(2006.01)* **B01D 33/80** *(2006.01)*

(52) Classification Coopérative des Brevets (CPC):
**B01D 33/804; B01D 33/04; B01D 33/805;**
**B01D 33/806; B01D 33/807; B01D 33/808;**
**C02F 1/004; C02F 1/008;** C02F 2103/007;
C02F 2209/03; G01F 23/00

(86) Numéro de dépôt international:
**PCT/EP2018/080331**

(87) Numéro de publication internationale:
**WO 2019/105690 (06.06.2019 Gazette 2019/23)**

(54) **OPTIMISATION DE FILTRES ROTATIFS RELATIVEMENT AU RISQUE DE COLMATAGE**

OPTIMIERUNG EINES DREHFILTERS IN BEZUG AUF DAS RISIKO DER VERSTOPFUNG

OPTIMISATION OF ROTATIVE FILTERS RELATIVE TO THE RISK OF BLOCKAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2017 FR 1761372**

(43) Date de publication de la demande:
**07.10.2020 Bulletin 2020/41**

(73) Titulaire: **Electricité de France**
**75008 Paris (FR)**

(72) Inventeurs:
• **BESNIER-AMOGU, Anne-Laure**
**78260 Achères (FR)**
• **CICERO, Guy-Michel**
**92800 Puteaux (FR)**
• **TOROSSIAN, Arthur**
**75012 Paris (FR)**
• **DUVILLARD-BECKER, Elisabeth**
**69002 Lyon (FR)**
• **BELAUD, Antoine**
**69003 Lyon (FR)**
• **ABEL, Hugues**
**69100 Villeurbanne (FR)**

(74) Mandataire: **Plasseraud IP**
**66, rue de la Chaussée d'Antin**
**75440 Paris Cedex 09 (FR)**

(56) Documents cités:
WO-A1-99/15255 WO-A1-2017/186603
FR-A1- 2 960 161 US-A1- 2013 118 991

**Description**

La présente invention concerne le domaine de la filtration de l'eau issue de sites naturels ou de plein air. A titre d'exemple, les sites peuvent être des rivières, lacs, mers ou océans. L'eau est ainsi susceptible d'incorporer des impuretés (algues, animaux marins, feuilles ou branches mortes et autres déchets notamment organiques). Ces éléments peuvent alors colmater des filtres rotatifs (par exemple des tambours de filtration) prévus pour filtrer l'eau avant son utilisation, par exemple mais non exclusivement en amont de circuits de génération de vapeur dans des installations de production électrique. Les documents WO99/15255 A1, WO2017/186603 A1, US 2013/118991 A1 et FR 2 960 161 A1 représentent l'état de l'art.

Ces éléments, appelés ci-après « colmatants » (végétaux ou organismes vivants) peuvent être en effet aspirés vers les stations de pompage d'une installation quelconque, en vue de tout prélèvement d'eau. Il peut s'agir d'une station de pompage d'une centrale de production électrique ou encore d'usine de production d'eau potable, ou autres. Dans toute application de pompage d'eau du type précité, il advient le risque d'entrainer le colmatage des filtres rotatifs (tambours filtrant ou filtres à chaines) prévus dans la station de pompage.

Dans certaines applications du type précité, le risque d'un débit nul ou insuffisant en aval des filtres rotatifs ne peut pas être pris. Aussi, il est recherché une solution pour optimiser la conception des filtres en fonction du débit minimum souhaité en aval des filtres, ou tout au moins de la perte de charge maximum tolérée en aval des filtres, ou encore tout au moins d'une évolution temporelle tolérable de cette perte de charge.

Il n'existe pas de technique quantitative précise pour prendre en compte l'effet de l'arrivée de ces colmatants dans le dimensionnement des systèmes de filtration mobiles des stations de pompage d'eau, avec une définition quantitative des paramètres de conception de ces filtres (taille du filtre, vitesse de rotation, système de lavage).

La présente invention vient améliorer cette situation.

Elle propose à cet effet un procédé de gestion d'une installation de pompage d'eau issue d'un milieu naturel susceptible de comporter des impuretés, l'installation étant destinée à mettre en service au moins un filtre rotatif pour purifier l'eau pompée tandis qu'une partie au moins des impuretés colmate au moins partiellement le filtre rotatif.

En particulier, le procédé comporte une estimation d'une évolution temporelle d'une perte de charge occasionnée par le colmatage du filtre rotatif par les impuretés, à partir au moins:

- de données relatives au milieu naturel,
- de dimensions du filtre rotatif, et
- de mesures locales relatives à au moins un niveau d'eau $N_{amont}$ en amont du filtre, et à un débit $Q_{aspiré}$ d'eau aspirée en aval du filtre.

Une telle réalisation permet alors d'anticiper la perte de charge dans le temps, pour optimiser les conditions de fonctionnement de l'installation de pompage, ou encore de concevoir des filtres optimisés pour les besoins de cette installation de pompage.

Dans une réalisation, le filtre rotatif comporte au moins un cylindre :

- de rayon donné $R_F$,
- mis en rotation autour d'un axe donné de hauteur $N_{axe}$ par rapport à une référence donnée,
- et de largeur donnée $L_F$, définie parallèlement à son axe de rotation,

et, la perte de charge étant définie par une différence entre les niveaux d'eau en amont $N_{amont}$ et en aval $N_{aval}$ du filtre, l'évolution temporelle de la perte de charge est déduite de l'évolution temporelle du niveau d'eau en aval du filtre, donnée par :

$$\frac{dN_{aval}}{dt} = \frac{Q_{filtre} - Q_{aspiré}}{2R_F L_F \sqrt{1 - \left(\frac{N_{axe} - N_{aval}}{R_F}\right)^2}}$$

avec :

- $N_{aval}$, un niveau d'eau en aval du filtre, mesuré ou déduit de la mesure du débit $Q_{aspiré}$ d'eau aspirée en aval du filtre ;
- $N_{axe}$, le niveau en hauteur de l'axe de rotation du filtre, déterminé relativement à une même référence que le niveau $N_{aval}$ d'eau en aval du filtre,

- $Q_{filtre}$ , un débit d'eau à travers le filtre.

Dans cette réalisation, le débit d'eau à travers le filtre $Q_{filtre}$ peut être calculé au moins en fonction du niveau d'eau en amont du filtre $N_{amont}$ déterminé relativement à la même référence que le niveau $N_{aval}$ d'eau en aval du filtre, pour :

$$\frac{(N_{amont} - N_{aval})}{L_F} > 0,65$$

comme suit :

$$Q_{filtre} = 2 L_F R_F Arc\cos\left(\frac{N_{axe} - N_{amont}}{R_F}\right) \sqrt{\frac{2g(N_{amont} - N_{aval})}{k_{Re}\left(1,3(1-f_1) + (\frac{1}{f_1}-1)^2\right)}} + 0,6 f_1 \, S_{em}\sqrt{2g(N_{amont} - N_{aval})}$$

où :

- $g$ est la constante gravitationnelle,
- $f_1$ est la porosité du filtre partiellement colmaté et correspond au rapport du volume libre d'eau dans le filtre sur le volume total du filtre,
- $S_{em}$ correspond à la section du filtre émergée et pour un tambour, elle s'exprime par :

$$S_{em} = L_F R_F (\alpha_{Namont} - \alpha_{Naval})$$

où

$$\alpha_{Namont} = 2 Arc\cos\left(\frac{N_{axe} - N_{amont}}{R_F}\right) \text{ et } \alpha_{Naval} = 2 Arc\cos\left(\frac{N_{axe} - N_{aval}}{R_F}\right)$$

- $k_{Re} = 1 + 0{,}7 e^{-0,0106\,Re}$ pour Re<400 et $k_{Re} = 1$ pour Re>400, Re étant le nombre de Reynolds propre au filtre.

Le cas (moins problématique par rapport à la perte de charge) où $\dfrac{(N_{amont} - N_{aval})}{L_F} < 0,65$ donne une équation légèrement différente de $Q_{filtre}$ présentée plus loin dans la description détaillée ci-après.

Dans l'expression ci-dessus, le rapport $f_1$ est donné par $f_1 = f_0(1 - T_{c1})$, $f_0$ étant une constante relative à la porosité du filtre propre, et $T_{c1}$ étant un taux de colmatage du filtre à un instant courant.

Dans une réalisation où le filtre comporte un tamis à fils croisés, le nombre de Reynolds précité est donné par :

$$Re = \frac{V_{am}\delta}{\nu} \text{ avec } \delta = a_0 + \delta_0 - a_0\sqrt{1 - T_{c1}}$$

Où:

- $\delta_0$ étant le diamètre de fil du filtre, propre sans impureté,
- $a_0$ étant la taille de la maille de filtre,
- $V_{am}$ étant la vitesse de l'eau en amont du filtre, et
- $T_{c1}$ étant un taux de colmatage du filtre à un instant courant,
- $\nu$ est la viscosité cinématique de l'eau, ayant pour valeur 0,000001 m2/s à une température de 25°C.

Dans cette réalisation, la vitesse de l'eau en amont du filtre est calculée par :

$$V_{am} = \sqrt{\frac{2g(N_{amont} - N_{aval})}{\xi}} \; ,$$

avec $\xi$ un coefficient de perte de charge du filtre.

Dans une réalisation, $\xi$ est le coefficient de perte de charge de la section immergée du filtre, donné par une corrélation d'Idel'cik adaptée à un grillage fin, et s'exprime par :

$$\xi = k_{Re}\left(1,3(1 - f_1) + (\frac{1}{f_1} - 1)^2\right)$$

Dans une réalisation, l'évolution temporelle de la perte de charge est fonction d'au moins un taux de colmatage du filtre à un instant courant et de la dérivée temporelle de ce taux de colmatage, et le procédé comporte une étape de résolution d'au moins une équation différentielle associée à ce taux de colmatage et faisant intervenir lesdites données relatives au milieu naturel.

Dans une réalisation où le filtre rotatif comporte une ou plusieurs buses de lavage en au moins un point donné d'impact de jet d'eau sur la périphérie interne du filtre, le taux de colmatage du filtre rotatif est déterminé pour trois types de partie distinctes du filtre :

- Une première partie du filtre immergée dans l'eau et en contact avec les impuretés, sur une surface de contact $S_0$ correspondant à toute la périphérie immergée du filtre, avec un premier taux de colmatage $T_{c1}$,

- Une deuxième partie du filtre, émergée et qui s'étend sur une surface périphérique allant au maximum jusqu'à l'impact des buses de lavage, notée $S_{bal}-S_0$, avec $S_{bal} \le S_{\alpha lav}$, $S_{\alpha lav}$ étant une surface périphérique de la partie émergée du filtre jusqu'à l'impact des buses, cette deuxième partie correspondant à un deuxième taux de colmatage $T_{c2}$,

- Une troisième partie du filtre, émergée et complémentaire de la deuxième partie, définie par Smax - $S_{bal}$, Smax étant la surface périphérique totale du filtre, cette troisième partie correspondant à un troisième taux de colmatage $T_{c3}$.

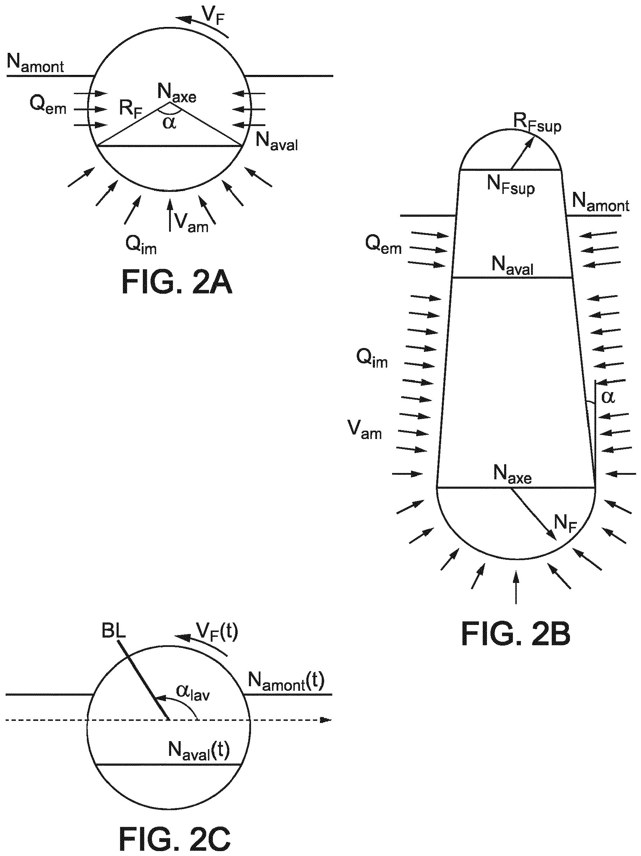

Ainsi, la position de l'impact du jet des buses sur la paroi périphérique interne du filtre joue un rôle dans les calculs de l'évolution de la perte de charge, comme expliqué en détail plus loin et en référence à la figure 2C.

Dans une réalisation, les premier, deuxième et troisième taux de colmatage sont reliés par les équations différentielles :

$$S_0 \frac{dT_{c1}}{dt} = \frac{CQ_{filtre}}{P} + (T_{c3} - T_{c1})L_F V_F$$

$$(S_{bal} - S_0)\frac{dT_{c2}}{dt} = \left(T_{c1} - \left(1 + \frac{1}{L_F V_F}\frac{dS_{bal}}{dt}\right)T_{c2}\right)L_F V_F$$

$$(S_{bal} - S_{\alpha lav})\frac{dT_{c3}}{dt} = \left((1 - r_{lav})T_{c2} - (1 + \frac{1}{L_F V_F}\frac{dS_{bal}}{dt})T_{c3}\right)L_F V_F$$

Où:

- C est une concentration mesurée dans le milieu naturel en impuretés colmatantes,
- $P$ est un pouvoir colmatant propre à l'espèce desdites impuretés colmatantes,
- $L_F$ est la largueur du filtre, définie parallèlement à son axe de rotation,
- $Q_{filtre}$ est un débit d'eau à travers le filtre,

- $V_F$ est la vitesse de rotation du filtre, fonction de seuils de perte de charge,
- $r_{lav}$ est un rendement de lavage du filtre par les buses, correspondant à une donnée mesurée ou statistique.

$V_F$, la vitesse de rotation du filtre, est habituellement imposée par l'exploitation du filtre en fonction des seuils de perte de charge mesurée.

Dans cette réalisation, pour un filtre rotatif de type tambour, de rayon donné $R_F$, mis en rotation autour d'un axe donné de hauteur $N_{axe}$ par rapport à une référence donnée, et de largeur donnée $L_F$, définie parallèlement à son axe de rotation :

- la surface immergée $S_0$ peut être donnée par :

$$S_{am} = R_F \times L_F \times \alpha_{Namont} \text{ , avec } \alpha_{Namont} = 2 Arccos\left(\frac{N_{axe} - N_{amont}}{R_F}\right)$$

- la surface périphérique totale du filtre peut être telle que $S_{max} = 2 \times \pi \times R_F \times L_F$
- la surface périphérique de la partie émergée allant jusqu'à l'impact des buses de lavage peut être donnée par :

$$S\alpha_{lav} = S_{max} \times \left(\frac{1}{4} + \frac{\alpha_{Namont}}{4\pi} + \frac{\alpha_{lav}}{360}\right),$$

où :
- $\alpha_{lav}$ est une valeur d'angle intrinsèque au filtre et fonction de la position d'impact des buses,
- $N_{amont}$, un niveau d'eau en amont du filtre, mesuré ou déduit de la mesure du débit $Q_{aspiré}$ d'eau aspirée en aval du filtre ;
- $N_{axe}$, le niveau en hauteur de l'axe de rotation du filtre, déterminé relativement à une même référence que le niveau $N_{amont}$ d'eau en amont du filtre.

Dans une réalisation alternative où le filtre rotatif est de type filtre à chaine comportant un cylindre rotatif supérieur et un cylindre rotatif inférieur reliés par une chaine :

- la surface immergée $S_0$ peut être donnée par $S_{am} = \left(\pi R_F + 2\frac{N_{amont} - N_{axe}}{\cos \alpha_F}\right) L_F$ , si $N_{amont} > N_{axe}$

et par $S_{am} = 2 L_F R_F Arc\cos\left(\frac{N_{axe} - N_{amont}}{R_F}\right)$ si $N_{amont} < N_{axe}$

- et, sans tenir compte d'un impact de buses de lavage éventuelles, la section de filtre émergée $S_{max} - S_0$ peut être donnée par :

$$S_{em} = \frac{2 L_F (N_{Namont} - N_{Naval})}{\cos \alpha_F}) \text{ avec } N_{axe} < N_{aval} \text{ et } N_{amont} < N_{Fsup},$$

Où:

- $R_{Fsup}$ le rayon du cylindre supérieur,
- $N_{Fsup}$ le niveau de l'axe de rotation supérieur, et
- $\alpha_F$ l'inclinaison de la surface filtrante par rapport à la verticale,
- $N_{amont}$, un niveau d'eau en amont du filtre, mesuré ou déduit de la mesure du débit $Q_{aspiré}$ d'eau aspirée en aval du filtre ;
- $N_{aval}$, un niveau d'eau en aval du filtre, mesuré ou déduit de la mesure du débit $Q_{aspiré}$ d'eau aspirée en aval du filtre ;
- $N_{axe}$, le niveau en hauteur de l'axe de rotation du filtre, déterminé relativement à une même référence que le niveau $N_{aval}$ d'eau en aval du filtre.

Dans une réalisation, le débit d'eau à travers le filtre $Q_{filtre}$ peut être calculé en fonction d'un taux de colmatage du filtre correspondant audit premier taux de colmatage Tcl dans ladite première partie du filtre, précitée.

Ainsi, dans une réalisation possible, les dimensions du filtre peuvent être choisies en fonction de besoins de l'installation en débit d'eau aspirée, et en anticipation d'un colmatage du filtre par les impuretés du milieu naturel.

Dans une réalisation alternative ou complémentaire, le filtre rotatif peut alors être mis en rotation à une vitesse variable en fonction d'une perte de charge estimée par anticipation, donnée par le calcul de ladite évolution temporelle de la perte de charge, pour un filtre de caractéristiques et de dimensions données.

Dans une réalisation alternative ou complémentaire encore, le débit d'eau aspirée en aval du filtre, pour les besoins de l'installation de pompage, peut être estimé par anticipation, à partir du calcul de ladite évolution temporelle de la perte de charge, pour un filtre de caractéristiques et de dimensions données.

La présente invention vise aussi un dispositif comportant un circuit de traitement pour mettre en œuvre le procédé selon l'invention.

Elle vise aussi un programme informatique comportant des instructions pour la mise en œuvre du procédé selon l'invention, lorsque ce programme est exécuté par un processeur (et/ou encore un support mémoire stockant les données d'un tel programme informatique, éventuellement de façon non transitoire).

D'autres avantages et caractéristiques de l'invention apparaitront à la lecture de la description détaillée ci-après d'exemples de réalisation et à l'examen des dessins annexés sur lesquels :

- La figure 1 illustre schématiquement une installation de filtrage comportant un filtre rotatif FIL,
- La figure 2A illustre schématiquement un filtre rotatif de type filtre tambour,
- La figure 2B illustre schématiquement un filtre rotatif de type filtre à chaine,
- La figure 2C illustre l'angle que forme l'impact du jet des buses de lavage sur la paroi périphérique intérieure d'un filtre rotatif, de type tambour filtrant dans l'exemple illustré,
- Les figures 3A, 3B et 3C illustrent des surfaces respectives de périphérie de filtre rotatif intervenant dans les calculs d'évolution de perte de charge,
- La figure 4 illustre les étapes principales d'un procédé selon un mode de réalisation de l'invention,
- La figure 5 illustre un dispositif pour la mise en œuvre du procédé selon l'invention.

L'invention présentée dans l'exemple de réalisation ci-après propose de modéliser l'évolution de la perte de charge au droit d'un filtre rotatif (ou l'évolution du niveau d'eau à l'aval d'un filtre rotatif), cette perte de charge étant générée par une arrivée de colmatants.

Il est proposé ci-après de présenter différentes configuration de fonctionnement du filtre et d'analyser les cinétiques de colmatage pour chaque configuration.

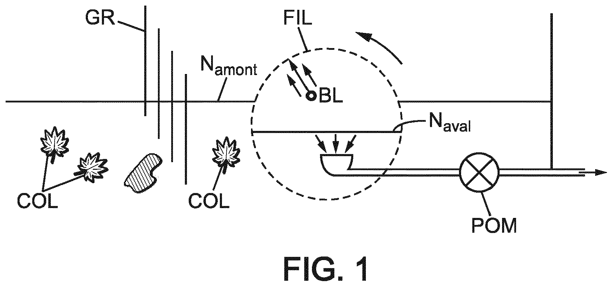

Dans ce qui suit, il est supposé qu'un filtre rotatif opère comme présenté ci-après en référence à la figure 1, dans une installation de filtrage en amont d'une station de pompage. L'installation de filtrage peut comporter des grilles GR pour retenir une partie des colmatants COL présents dans un cours d'eau naturel (tels que des algues, feuilles ou autres débris végétaux, ou autres débris plus généralement), en amont d'un filtre rotatif FIL comportant une paroi externe avec des ouvertures (un maillage de fil métallique par exemple) pour laisser passer l'eau à l'intérieur et maintenir les débris COL à l'extérieur. Le filtre est mis en rotation à une vitesse plus ou moins élevée en fonction de la perte de charge à travers le filtre et donnée par la hauteur d'eau en amont $N_{amont}$ moins la hauteur d'eau en aval $N_{aval}$. Habituellement, le niveau amont est constant (sur les périodes de temps considérées ici tout au moins), tandis que le niveau aval varie (baisse) en fonction du colmatage du filtre. Le niveau aval peut être mesuré par des capteurs de pression ou autres. S'il est relevé que le niveau aval est plus bas que des seuils prédéfinis, le filtre FIL est mis en rotation (tel un tambour de machine à laver typiquement) pour dégager autant que possible les colmatants, la vitesse de rotation du filtre étant réglée par rapport à la perte de charge mesurée. Par ailleurs, des buses de lavage BL sont habituellement prévues à l'intérieur du filtre à une position fixe (et ne sont pas mises en rotation comme le filtre), de sorte que leur point d'impact sur la périphérie intérieure du filtre a un angle constant par rapport à l'horizontale comme on le verra plus loin en référence à la figure 2C. L'injection des buses permet alors de nettoyer depuis l'intérieur la surface périphérique extérieure du filtre pour en retirer des colmatants autant que possible.

L'eau ainsi filtrée à l'intérieure du filtre peut être recueillie comme illustré sur la figure 1, puis pompée par une pompe POM pour un circuit de refroidissement par exemple d'une centrale de production d'électricité ou autre.

Par ailleurs, on distingue ci-après deux types de filtre rotatif :

- Un premier type, cylindrique (rond en coupe), de type tambour filtrant tel qu'illustré sur la figure 2A, et
- Un deuxième type dit « à chaîne » tel qu'illustré sur la figure 2B, et comprenant deux tambours (inférieur et supérieur) reliés par une chaine.

Les paramètres intervenant sur les deux figures 2A et 2B sont explicités dans les tableaux ci-après.

**Tableau 1 : Paramètres géométriques du filtre**

| Paramètre | Unité | Notation |
|---|---|---|
| Largeur du filtre (parallèle à l'axe) | M | $L_F$ |
| Rayon du filtre (considéré comme étant le cylindre inférieur pour le filtre à chaîne) | M | $R_F$ |
| Niveau de l'axe de rotation du filtre (par rapport à un niveau référence dans l'installation de pompage) | M | $N_{axe}$ |
| Taille de la maille de filtre propre | M | $a_0$ |
| Diamètre du fil du filtre propre | M | $\delta_0$ |
| Porosité de la maille de filtre propre | - | $f_0$ |
| Rayon du cylindre supérieur (pour le filtre à chaîne) | M | $R_{Fsup}$ |
| Niveau de l'axe de rotation supérieur (pour le filtre à chaîne) | M | $N_{Fsup}$ |
| Inclinaison de la surface filtrante par rapport à la verticale (pour le filtre à chaîne) | Radian | $\alpha_F$ |
| Position des buses de lavage : | Degrés | $\alpha_{lav}$ |

Le dernier paramètre du tableau 1 ci-avant relatif à la position des buses de lavage est explicité ci-après en référence à la figure 2C. Les buses de lavage sont dans une position fixe à l'intérieur du tambour. Le point d'impact de leur jet d'eau sur la paroi périphérique interne du filtre forme l'angle $\alpha_{lav}$ (en degrés) par rapport à un axe horizontal orienté (vers la droite de la figure). La figure 2C illustre la définition de l'angle $\alpha_{lav}$ dans le cas d'un tambour filtrant. Dans le cas d'un filtre à chaine, les buses de lavage sont sur le cylindre supérieur.

Il est présenté les paramètres de fonctionnement du filtre dans le tableau 2 suivant.

**Tableau 2 : Paramètres de fonctionnement du filtre**

| Paramètre | Unité | Notation |
|---|---|---|
| Niveau amont | m | $N_{amont}$ |
| Niveau aval | m | $N_{aval}$ |
| Débit aspiré par la station de pompage | $m^3/s$ | Qasp |
| Vitesse de rotation du filtre pour chaque seuil de perte de charge | m/s | $V_F$ |
| Seuils de perte de charge de déclenchement des vitesses de rotation | m | Dp |
| Rendement de lavage | - | $r_{lav}$ |

Il est défini en outre des paramètres caractérisant les colmatants:

- C, la concentration en colmatant ($kg/m^3$)
- P, le pouvoir colmatant de l'espèce de colmatants étudiée. Ce paramètre P est défini comme la masse nécessaire pour colmater 1 $m^2$ de surface. On peut aussi le voir comme étant le poids d'1$m^2$ de colmatants uniformément répartis. Il est exprimé en $kg/m^2$.

La donnée de concentration en colmatants est liée à la connaissance de l'hydrobiologie locale. Elle peut par exemple être estimée à partir des biomasses évacuées à la station de pompage lors d'événements de colmatage passés. Cette donnée peut être dérivée d'une observation et être mesurée. Elle peut caractériser ainsi un paramètre présenté dans les équations plus loin.

On présente ci-après le principe de calcul de l'évolution de la perte de charge en cas d'arrivée de colmatants.

On calcule plus particulièrement l'évolution du niveau aval du filtre rotatif qui dépend :

- du type de filtre et de son fonctionnement,

- du niveau d'eau en amont,

- de la concentration de colmatants,

- et du débit aspiré en aval.

En outre, on forme l'hypothèse selon laquelle la concentration en colmatants est uniformément répartie dans la tranche d'eau. Cette concentration peut être constante ou variable dans le temps.

On forme aussi l'hypothèse que tout le colmatant qui arrive sur le filtre y est retenu.

Ensuite, la prise en compte des phénomènes transitoires est avantageuse pour bien représenter la dynamique de colmatage : le débit à travers le filtre n'est pas nécessairement égal au débit aspiré pendant le colmatage.

A l'instant initial, on suppose le filtre propre et le régime permanent établi de sorte qu'initialement le débit passant par le filtre correspond au débit aspiré. On calcule ensuite les variations des variables principales entre des instants t et t+dt en trois séquences, avec un système d'équations couplées, comme suit :

- On calcule d'abord l'évolution du taux de colmatage,

- On en déduit le débit à travers le filtre en fonction du taux de colmatage et de la perte de charge,

- On résout ensuite l'évolution du niveau aval avec le débit du filtre ainsi calculé et le débit aspiré. Cette variation dépend du type de filtre (tambour filtrant ou filtre à chaine).

Les notations de calcul sont synthétisées dans le tableau ci-dessous.

**Tableau 3 : Variables de calcul**

| Paramètre | Unité | Notation |
|---|---|---|
| Débit total du filtre | $m^3/s$ | $Q_{filtre}$ |
| Débit émergé | $m^3/s$ | Qem |
| Débit immergé | $m^3/s$ | $Q_{im}$ |
| Section de filtre émergée | $m^2$ | $S_{em}$ |
| Section de filtre immergée | $m^2$ | Sim |
| Section de filtre mouillée par $N_{amont}$ | $m^2$ | $S_0$ |
| Section de filtre maximale | $m^2$ | Smax |
| Section de filtre balayée | $m^2$ | $S_{bal}$ |
| Taille de la maille de filtre colmaté | m | A |
| Diamètre du fil du filtre colmaté | m | $\Delta$ |
| Taux de colmatage | - | $T_c$ |
| Porosité de la maille de filtre colmaté | - | F |
| Vitesse du fluide à l'amont de la section immergée | m/s | $V_{am}$ |
| Coefficient de perte de charge de la section émergée | - | $C_d$ |
| Coefficient de perte de charge de la section immergée | - | $\xi$ |
| Pour un tambour filtrant, l'angle du secteur associé à un niveau N | radian | A |
| Pour un filtre à chaine, la hauteur associée à un niveau N par rapport à l'axe inférieur | m | $H_N$ |

Le calcul de l'évolution du taux de colmatage s'effectue comme présenté ci-dessous.

Par définition, le taux de colmatage Tc est le rapport du volume de fluide colmaté sur le volume fluide initial. Exprimé autrement, en notant f la porosité volumique d'un filtre colmaté noté comme le rapport du volume libre pour le fluide sur le volume total de filtre considéré (fluide plus solide), on a :
$$T_c = 1 - \frac{f}{f_0}$$
, $f_0$ étant la porosité du filtre propre.

Le volume solide correspond à la somme des volumes de filtre propre et de colmatants accumulés, comme suit :

$$f = \frac{V_{fluide}}{V_{fluide} + V_{solide}}$$

Pour un filtre dit « bidimensionnel » (regroupant les filtres de type grille, tambour filtrant, ou filtre à chaine), ces rapports de volumes correspondent aux rapports des sections.

On utilise donc ci-après les sections correspondant aux dimensions physiques dans lesquelles les filtres sont conçus pour décrire les modèles numériques.

On cherche à comparer en particulier la surface colmatée et surface fluide du filtre.

La section fluide est donnée par :

$$S_{fluide} = f_0(S_{tot} - S_{colm})$$

La section totale colmatée est liée au taux de colmatage :

$$\boxed{S_{colm} = T_c S_{tot}}$$

Par ailleurs, le colmatant est caractérisé par le « pouvoir colmatant » noté P et tel que :

$M_c = PS_{colm} = T_c PS_{tot}$ , Mc étant la masse de colmatants (en kg) sur le filtre et associée à la surface colmatée.

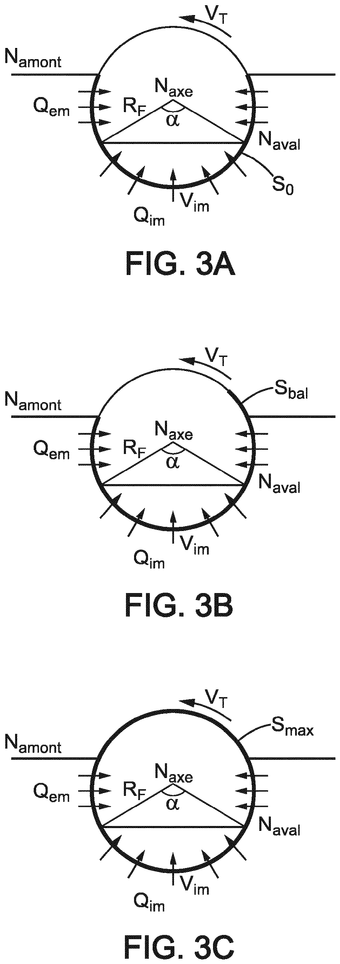

On définit par ailleurs la surface du filtre tambour ou du bas du filtre à chaine en contact avec des colmatants selon les trois cas des figures 3A, 3B et 3C.

Sur la figure 3A, seule la partie du tambour immergée dans l'eau est en contact avec les colmatants, définissant ainsi une surface externe de contact $S_0$. Sur la figure 3B, la quantité de colmatants est telle qu'une partie des colmatants reste en outre en contact avec une partie du tambour non immergée, sur une surface variable $S_{bal}$ :

$S_{bal} = S_0 + L_F V_F t$ , correspondant donc à une surface balayée supérieure à $S_0$ mais inférieure à la surface totale extérieure du tambour Smax. Sur la figure 3C montrant le cas le plus défavorable, le tambour est entièrement recouvert de colmatants sur toute sa surface Smax.

On peut plus particulièrement considérer trois zones adjacentes et complémentaires, par rapport la surface balayée $S_{bal}$ sur le (ou les) premier(s) tour(s) de filtre rotatif (première(s) révolution(s) du filtre, typiquement avant l'établissement d'un régime permanent intervenant après plusieurs rotations) :

-  sur la zone Z1 de colmatage $S_0$, correspondant à un taux de colmatage $T_{c1}$,
-  sur la zone Z2, neutre et correspondant à $S_{bal}-S_0$, avant les buses de lavage, avec $S_{bal} \leq S_{\alpha lav}$, correspondant à un taux de colmatage $T_{c2}$ ($S_{\alpha lav}$ correspondant à la surface périphérique jusqu'à l'impact des buses de lavage et définie par l'angle $\alpha_{lav}$),
-  sur la zone Z3, complémentaire $S_{max} - S_{bal}$ (incluse ainsi dans la zone de nettoyage par les buses pour $S_{bal} > S_{\alpha lav}$), correspondant à un taux de colmatage $T_{c3}$.

On définit les masses échangées entre les zones, sur l'intervalle de temps dt :

-  dM1, 1a masse entrant de la zone Z3 vers la zone Z1 vaut : $dM1 = PT_{c3}L_F V_F dt$

-  dM2, la masse sortant de la zone Z1 vers la zone Z2 vaut : $dM2 = PT_{c1}L_F V_F dt$

-  dM3, la masse sortant de la zone Z2 vers la zone Z3 vaut : $dM3 = PT_{c2}L_F V_F dt$

Sur la zone Z1 (section $S_0$), le bilan de masse sur la durée dt s'écrit :

$$dMentrant + dM1 - dM2 = PdS_{colm1}$$

-  La masse entrant dans le filtre vaut :

$$dMentrant = CQ_{filtre} \, dt$$

- La section colmatée sur la zone Z1 et sa dérivée s'écrivent :

$$S_{colm1} = T_{c1}S_0$$

$$dS_{colm1} = S_0 dT_{c1}$$

On obtient une première relation :

$$S_0 \frac{dT_{c1}}{dt} = \frac{CQ_{filtre}}{P} + (T_{c3} - T_{c1})L_F V_F$$

Sur la zone Z2 (section $S_{bal}$-$S_0$), le bilan de masse sur la durée dt s'écrit :

$$dM2 - dM3 = PdS_{colm2}$$

- Sur cette zone, la section colmatée et sa dérivée s'écrivent :

$$S_{colm2} = T_{c2}(S_{bal} - S_0)$$

$$\frac{dS_{colm2}}{dt} = (S_{bal} - S_0)\frac{dT_{c2}}{dt} + T_{c2}\frac{dS_{bal}}{dt}$$

On obtient une seconde relation :

$$(S_{bal} - S_0)\frac{dT_{c2}}{dt} = \left( T_{c1} - \left(1 + \frac{1}{L_F V_F}\frac{dS_{bal}}{dt}\right)T_{c2}\right)L_F V_F$$

Plus précisément, la zone Z2 est définie plus finement en fonction de la position de l'impact du jet des buses et la relation ci-dessus est valable tant que $S_{bal} < S_{\alpha lav}$ En revanche pour $S_{bal} \geq S_{\alpha lav}$, on a :

$$S_{bal} = S_{\alpha lav}$$

$$\frac{dS_{bal}}{dt} = 0$$

Sur la zone Z3 (section $S_{max}$-$S_{bal}$), pour $S_{bal} \leq S_{\alpha lav}$, le taux de colmatage est nul et on écrit :

$$T_{c3} = 0$$

$$\left| \frac{dT_{c3}}{dt} = 0 \right|$$

- Pour $S_{\alpha lav} < S_{bal} \leq S_{max}$, le bilan de masse sur la durée dt s'écrit :

$$dM3 - dM1 - dM_{sortt} = PdS_{colm3}$$

○ La masse sortant ($dM_{sortt}$) du filtre par nettoyage de la zone Z3 vaut :

$$dM_{sortt} = PT_{c2}dS_{net} = r_{lav}PT_{c2}L_FV_Fdt$$

○ La section colmatée sur la zone Z3 et sa dérivée s'écrivent :

$$S_{colm3} = T_{c3}(S_{bal} - S_{\alpha lav})$$

$$\frac{dS_{colm3}}{dt} = (S_{bal} - S_{\alpha lav})\frac{dT_{c3}}{dt} + T_{c3}\frac{dS_{bal}}{dt}$$

On obtient la troisième relation :

$$\left(S_{bal} - S_{\alpha lav}\right)\frac{dT_{c3}}{dt} = \left( (1 - r_{lav})T_{c2} - (1 + \frac{1}{L_FV_F}\frac{dS_{bal}}{dt})T_{c3} \right)L_FV_F$$

- et, pour $S_{bal} \geq S_{max}$ :

$$S_{bal} = S_{max}$$

$$\frac{dS_{bal}}{dt} = 0$$

Ensuite, le débit à travers le filtre peut être calculé comme suit. Il est composé d'un débit immergé et d'un débit émergé, le premier étant décrit par l'équation d'Idel'Cik, le second par une loi établie à partir des essais en canal avec une plaque perforée de porosité connue (selon des études internes du demandeur) :

$$Q_{filtre}(t) = Q_{im}(t) + Q_{em}(t)$$

Le débit immergé $Q_{im}(t)$ peut être calculé par une loi d'Idel'cik en fonction de la perte de charge.
Dans le cas général où le taux de colmatage varie le long de la surface amont immergée, le débit immergé vaut :

$$Q_{im} = \int_{S_{am}} V_{am}dS$$

La vitesse locale à l'amont de la section dS est calculée en fonction de la perte de charge du filtre par :

$$N_{amont} - N_{aval} = \xi \frac{V_{am}^2}{2g}$$

Le coefficient $\xi$ dépend du taux de colmatage local sur la section dS. Si le taux de colmatage est uniforme sur

$$Q_{im} = S_{am}\sqrt{\frac{2g(N_{amont} - N_{aval})}{\xi}}$$

la section immergée, le coefficient $\xi$ est uniforme et on obtient :                        , le terme $S_{am}$ ne représentant finalement que la section immergée $S_0$ calculée précédemment.

Pour la maille colmatée du filtre, le coefficient $\xi$ est donné par une corrélation d'Idel'cik adaptée à un grillage

$$\xi = k_{Re}\left(1,3(1-f) + (\frac{1}{f}-1)^2\right)$$

fin :                        , avec en particulier ici $f = f_1 = f_0(1 - T_{c1})$, $f_0$ étant une constante relative à la porosité du filtre propre, et $T_{c1}$ le taux de colmatage du filtre dans la première zone Z1.

$$Re = \frac{V_{am}\delta}{\nu}$$

Le coefficient $k_{Re}$ dépend du nombre de Reynolds Re calculé par :                        , avec $\nu$ la viscosité cinématique de l'eau (constante et valant 0,000001 m²/s à 25°C) et $\delta$ le diamètre du fil de la maille colmatée tel que :

$$\delta = a_0 + \delta_0 - a_0\sqrt{1-T_c}$$

$$k_{Re} = 1+0,7e^{-0.0106\,Re}$$

Pour Re<400:     $k_{Re} = 1$

Ici $T_c = T_{c1}$.

Pour un tambour filtrant, la section amont vaut :

$$S_{am} = L_F R_F \alpha_{Namont} = 2L_F R_F\,Arc\cos\left(\frac{N_{axe} - N_{amont}}{R_F}\right)$$

Pour un filtre à chaine, la section amont vaut :

- si $N_{amont} > N_{axe}$

$$S_{am} = \left(\pi R_F + 2\frac{N_{amont} - N_{axe}}{\cos\alpha_F}\right)L_F$$

- si $N_{amont} < N_{axe}$

$$S_{am} = 2L_F R_F\,Arc\cos\left(\frac{N_{axe} - N_{amont}}{R_F}\right)$$

Le débit émergé est calculé ensuite par une corrélation établie à partir d'essais en canal avec une plaque perforée de porosité connue (selon les résultats internes du demandeur). D'après ces essais, le débit émergé se calcule en fonction de la section de passage pour le fluide (fS$_{em}$) et de la perte de charge par :

$$Q_{em} = C_d \, fS_{em} \sqrt{2\,g\,(N_{amont} - N_{aval})}$$

$$x = \frac{(N_{amont} - N_{aval})}{L_F}$$

où le coefficient de débit $C_d$ dépend de :

- pour x < 0,65:

$$C_d = -0,8\,x^3 + 2,48\,x^2 - 2,60\,x + 1,51$$

- pour x > 0,65: $C_d = 0,6$

Ces valeurs de Cd se calculent ainsi en fonction du paramètre x dépendant de la perte de charge ($N_{amont}$ - $N_{aval}$). Ces formules ont été établies par des essais en canal par le Déposant et il s'est donc avéré préférable de tenir compte des deux formules selon si x>0,65 ou x<0,65.

Pour un tambour filtrant, la section de filtre émergée vaut :

$$S_{em} = L_F R_F (\alpha_{Namont} - \alpha_{Naval})$$

$$\alpha_N = 2\,Arc\,\cos\left(\frac{N_{axe} - N}{R_F}\right) \text{ que ce soit pour N=N}_{amont} \text{ ou N=N}_{aval}$$

Pour un filtre à chaine, dans le cas le plus fréquent où N$_{axe}$ < N$_{aval}$ et N$_{amont}$ < N$_{Fsup}$, la section de filtre émergée vaut :

$$S_{em} = \frac{2L_F(N_{Namont} - N_{Naval})}{\cos \alpha_F}$$

Dans un filtre à chaine, les buses de lavage sont sur le cylindre supérieur au-dessus du niveau NFsup et la position d'impact du jet intervient dans les calculs comme pour un tambour filtrant, mais avec une formule légèrement différente.

L'évolution du niveau aval est déterminée alors en résolvant l'équation de bilan de masse sur le volume aval :

$$\frac{dV_{faval}}{dt} = Q_{filtre} - Q_{aspiré}$$

- où le débit du filtre $Q_{filtre}$ est calculé à chaque instant en fonction du taux de colmatage et de la perte de charge,
- et le débit aspiré $Q_{aspiré}$ est mesuré répétitivement en fonction du temps.

On note $V_f(N)$, le volume à l'aval du filtre associé à un niveau N.

Pour un tambour filtrant, ce volume vaut :

$$V_f(N) = \frac{R_F^2}{2} L_F (\alpha_N - \sin \alpha_N)$$

avec :

$$\alpha_N = 2Arccos\left(\frac{N_{axe}-N}{R_F}\right)$$

Ainsi :

$$\frac{dV_{faval}}{dt} = 2R_F L_F \sqrt{1-\left(\frac{N_{axe}-N_{aval}}{R_F}\right)^2}\frac{dN_{aval}}{dt}$$

Pour un filtre à chaines, ce volume dépend de $H_N$ et $\alpha_F$ :

$$H_N = N - N_{axe}$$

$$tg\alpha_F = \left(\frac{R_F - R_{F\sup}}{N_{F\sup} - N_{axe}}\right)$$

$$V_f(N) = \left(\frac{\pi R_F^2}{2} + (2R_F - H_N tg\,\alpha_F)H_N\right)L_F$$

Pour $N_{amont} > N_{axe}$, ce volume vaut : $L_F$ et on a :

$$\frac{dV_{faval}}{dt} = 2L_F(R_F - tg\,\alpha_F(N_{aval}-N_{axe}))\frac{dN_{aval}}{dt}$$

Pour $N_{amont} < N_{axe}$, le volume aval et sa dérivée se calculent comme pour un tambour filtrant.

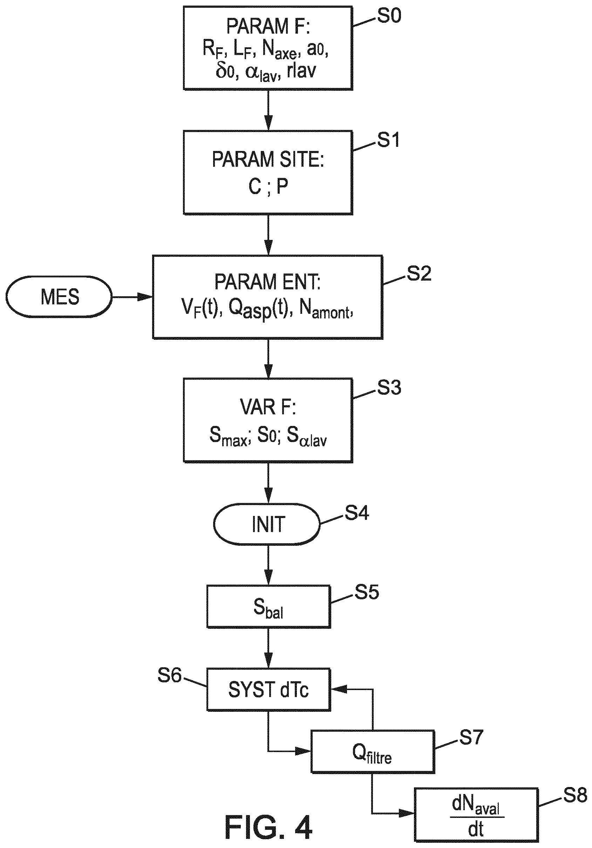

En synthèse ci-après, comme illustré sur la figure 4, on considère à une première étape S0 les paramètres dimensionnels et fonctionnels, intrinsèques d'un filtre (tambour ou à chaîne) :

- $R_F$, le rayon du filtre (considéré comme étant le cylindre inférieur pour le filtre à chaîne),
- $L_F$, la largeur du filtre (parallèle à son axe de rotation),
- $N_{axe}$, le niveau de l'axe de rotation du filtre (hauteur en mètres par rapport à un niveau référence de l'installation de pompage),
- $a_0$, la taille de maille du filtre propre (sans colmatant), en mètres,
- $\delta_0$, le diamètre du fil du filtre propre (en m),
- $f_0$, la porosité de la maille du filtre propre,
- $\alpha_{lav}$, la position des buses de lavage dans le filtre, exprimée en radians par rapport à l'axe de rotation du filtre,
- $r_{lav}$, le rendement de lavage du filtre par les buses.

A l'étape S1, on tient compte en outre de caractéristiques propres au site de pompage :

- C, la concentration en colmatant (kg/m$^3$) dans l'eau qui peut être mesurée sur le site de pompage (hydrobiologie locale),
- P, le pouvoir colmatant de l'espèce de colmatants étudiée.

Par ailleurs à l'étape S2, il est pris en compte en outre les variables ci-après, susceptibles d'évoluer dans le temps, et constituant des paramètres d'entrée des calculs effectués ensuite :

- $V_F(t)$, la vitesse de rotation du filtre pour chaque seuil de perte de charge,
- $Q_{asp}(t)$, le débit aspiré par la station de pompage en m$^3$/s,

- N$_{amont}$(t), le niveau amont (en mètres) par rapport à une référence dans l'installation de pompage.

On prévoit en pratique une mesure locale de la perte de charge à différents instants par des capteurs de niveau N$_{amont}$ et N$_{aval}$. En fonction de cette mesure, un tambour filtrant est mis en rotation à une vitesse V$_F$(t) plus ou moins élevée en fonction de la perte de charge mesurée ponctuellement.

En effet, le fonctionnement habituel d'un filtre (tambour ou à chaine) est de se mouvoir en rotation en fonction de la perte de charge mesurée par des capteurs (de niveaux amont et aval). Plus particulièrement, la vitesse de rotation V$_F$ dépend d'une valeur seuil de perte de charge dépassée, suite à l'obtention de la mesure de perte de charge précitée. Ainsi, les vitesses de rotation peuvent se déclencher successivement en fonction de seuils Dp respectifs de perte de charge successivement atteints.

A l'étape S3, on en déduit les variables ci-après intervenant dans les calculs et propres aux données des filtres, tels qu'installés sur site (cas d'un tambour):

La surface S$_{max}$ = 2 × $\pi$ × R$_F$ × L$_F$

La surface S$_0$ = S$_{Namont}$ = R$_F$ × L$_F$ × $\alpha_{Namont}$

La surface $S\,\alpha_{lav} = S_{max} \times (\frac{1}{4} + \frac{\alpha_{Namont}}{4\pi} + \frac{\alpha_{lav}}{360})$

$\alpha_{Namont}$ étant compté en radians et $\alpha_{lav}$ étant compté en degrés,

avec $\alpha_{Namont} = 2\,Arc\,\cos\left(\frac{N_{axe} - N_{amont}}{R_F}\right)$

Ensuite à l'étape d'initialisation S4, on détermine des conditions initiales à l'instant t=0, auquel on suppose que le filtre est propre et que le régime d'écoulement est permanent, comme suit :

$$Tc_1(0) = Tc_2(0) = Tc_3(0) = 0$$

$$Q_{filtre}(0) = Q_{asp}(0)$$

$$V_{am}(0) = \frac{Q_{asp}(0)}{S_0}$$

Puis, à l'étape S5, à chaque pas de temps (dt) :

- on calcule la surface balayée S$_{bal}$ :

avec $S_{bal}(t) = S_0 + L_F V_F t$ et $dS_{bal}(t) = L_F V_F dt$ pour S$_{bal}$ < S$_{max}$ et sinon $(S_{bal} = S_{max}) : \frac{dS_{bal}}{dt} = 0$

A l'étape S6, on peut alors poser le système à trois équations différentielles dans le temps, relatives à l'évolution des taux de colmatage, comme vu précédemment :

$$dT_{c1} = \frac{1}{S_0}(\frac{CQ_{filtre}}{P} + (T_{c3} - T_{c1})L_F V_F)dt$$

pour

$$S_{bal} \le S_{\alpha lav}\,, dT_{c2} = \frac{1}{(S_{bal} - S_0)}(T_{c1} - 2T_{c2})L_F V_F dt$$

$$dT_{c3} = 0$$

pour

$$S_{bal} > S_{\alpha lav}$$

$$dT_{c2} = \frac{1}{(S_{\alpha lav} - S_0)}(T_{c1} - T_{c2})L_F V_F dt$$

pour

$$S_{\alpha lav} < S_{bal} < S_{max} \ ,$$

$$dT_{c3} = \frac{1}{(S_{bal} - S_{\alpha lav})}((1 - r_{lav})T_{c2} - 2T_{c3})L_F V_F dt$$

pour

$$S_{bal} > S_{max}$$

$$dT_{c3} = \frac{1}{(S_{max} - S_{\alpha lav})}((1 - r_{lav})T_{c2} - T_{c3})L_F V_F dt$$

Dans ce système d'équation, le débit à travers le filtre $Q_{filtre}$ est initialement donné par $Q_{filtre}(0)=Q_{asp}(0)$ et c'est cette valeur $Q_{asp}(0)$ qu'il prend initialement pour calculer $dT_{c1}$ à l'instant t=0+dt, ainsi que $dT_{c1}$, $dT_{c2}$ et $dT_{c3}$, et pour en déduire ensuite de nouvelles valeurs de $T_{c1}$, $T_{c2}$ et $T_{c3}$

Ensuite, à l'étape S7, on en déduit le nouveau débit à travers le filtre en fonction du taux de colmatage $T_{c1}$ et de la perte de charge, comme suit, à titre d'exemple ici dans le mode de réalisation le plus courant où le filtre est un tambour rotatif tel que :

$$\frac{(N_{amont} - N_{aval})}{L_F} > 0,65$$

$$Q_{filtre} = 2L_F R_F Arc\cos\left(\frac{N_{axe} - N_{amont}}{R_F}\right)\sqrt{\frac{2g(N_{amont} - N_{aval})}{k_{Re}\left(1,3(1-f_1) + (\frac{1}{f_1}-1)^2\right)}} + 0,6f_1\ S_{em}\sqrt{2g(N_{amont} - N_{aval})}$$

avec : $f_1 = f_0(1 - T_{c1})$, la porosité dans la première zone du filtre, immergée et qui se déduit donc de $T_{c1}$, et :

$$\alpha_N = 2\,Arc\cos\left(\frac{N_{axe} - N}{R_F}\right)$$

- $S_{em} = L_F R_F(\alpha_{Namont} - \alpha_{Naval})$ où
- $k_{Re} = 1 + 0,7e^{-0,0106\,Re}$ pour Re<400 ; $k_{Re} = 1$ pour Re>400, Re étant le nombre de Reynolds propre au filtre tel que : $Re = \frac{V_{am}\delta}{\nu}$ avec $\delta = a_0 + \delta_0 - a_0\sqrt{1-T_{c1}}$ et $V_{am} = \sqrt{\frac{2g(N_{amont} - N_{aval})}{\xi}}$

La valeur du débit à travers le filtre ainsi trouvée $Q_{filtre}$, peut alors être injectée à nouveau dans la première

équation $$dT_{c1} = S_0 \left( \frac{CQ_{filtre}}{P} + (T_{c3} - T_{c1}) L_F V_F \right) dt$$ pour déterminer $dT_{c1}$ pour l'instant suivant t+dt, ainsi que $dT_{c1}$, $dT_{c2}$ et $dT_{c3}$, et de là, $T_{c1}$, $T_{c2}$ et $T_{c3}$ à nouveau.

Enfin, l'évolution temporelle du niveau aval en fonction du débit du filtre et du débit aspiré peut être donnée aussi à l'étape S8 par:

$$\frac{dN_{aval}}{dt} = \frac{Q_{filtre} - Q_{aspiré}}{2R_F L_F \sqrt{1 - \left( \frac{N_{axe} - N_{aval}}{R_F} \right)^2}}$$

L'invention peut être mise en œuvre pour :

- L'optimisation du fonctionnement d'un système de filtration rotatif, en choisissant par exemple les différents seuils de perte de charge et les vitesses correspondantes, afin d'anticiper les pertes de charge futures et déterminer d'emblée les vitesses les plus appropriées ;

- La simulation d'un évènement de colmatage passé, afin de perfectionner les équations ci-dessus, notamment mais non exclusivement les paramètres propres à l'hydrobiologie du site (étape S1 précitée) ;

- La détermination des dimensions idéales des filtres rotatifs pour de nouvelles installations de pompage nécessitant un débit aval maximum donné, et compte tenu de l'hydrobiologie du site de pompage.

Le procédé de la figure 4 peut donc être utilisé pour optimiser le fonctionnement d'un filtre rotatif (affiner les valeurs des seuils de déclenchement des vitesses de rotation, les seuils de baisse du débit pompé, ou autres) ou pour dimensionner les filtres rotatifs d'une nouvelle station de pompage (extension d'une station existante, renouvellement ou création d'une nouvelle station de pompage).

Les avantages de ce procédé sont les suivants :

- L'estimation de l'évolution de la perte de charge est quantitative,
- Elle dépend d'un site spécifique,
- Elle est peu couteuse en termes de ressources et temps de calculs,
- Elle peut s'appliquer pour le pompage d'eau pour générateurs de vapeur en production d'électricité, mais plus généralement dans toute industrie impliquant une station de pompage d'eau d'un milieu naturel (mer, lac ou rivière) (industrie chimique, ou de traitement des eaux), ou encore pour l'industrie de la conception de filtres rotatifs de façon plus générale.

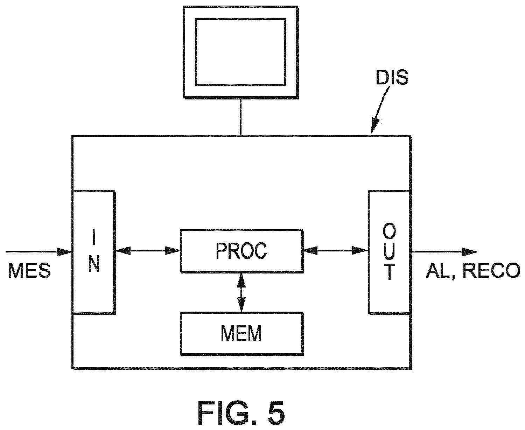

Ce procédé, ainsi que les calculs associés ci-avant, peut être mis en œuvre par un programme informatique dont l'algorithme général suit l'ordinogramme présenté ci-avant en référence à la figure 4. A ce titre, l'invention vise aussi un tel programme informatique, ainsi qu'un dispositif informatique, tel qu'illustré sur la figure 5 et comportant un circuit de traitement DIS comprenant :

- Une interface d'entrée IN pour recevoir des mesures de perte de charge (ou tout au moins de niveaux aval), ou encore des valeurs simulées de telles mesures pour la conception d'un filtre rotatif,
- Une mémoire MEM pour stocker des instructions d'un programme informatique au sens de l'invention (et éventuellement des données de paramètres de filtre et/ou des données provisoires de calcul),
- Un processeur PROC pour coopérer avec la mémoire MEM et exécuter le procédé ci-avant, et
- Une interface de sortie OUT pour récupérer un calcul d'évolution de la perte de charge, et éventuellement un signal d'alarme AL pour alerter d'une insuffisance d'alimentation en eau du système de pompage POM due à une trop forte perte de charge à prévoir après un délai estimé à partir de cette évolution, ou encore des données de recommandations RECO pour la conception optimisée d'un filtre dans le cas où les données de mesure MES en entrée IN sont simulées.

**Revendications**

1. Procédé de gestion d'une installation de pompage d'eau issue d'un milieu naturel susceptible de comporter des impuretés, l'installation étant destinée à mettre en service au moins un filtre rotatif pour purifier l'eau pompée tandis qu'une partie au moins des impuretés colmate au moins partiellement le filtre rotatif,

Le procédé étant **caractérisé en ce qu'**il comporte une estimation d'une évolution temporelle d'une perte de charge occasionnée par le colmatage du filtre rotatif par les impuretés, à partir au moins:

- de données relatives au milieu naturel,
- de dimensions du filtre rotatif, et
- de mesures locales relatives à au moins un niveau d'eau $N_{amont}$ en amont du filtre, et à un débit $Q_{aspiré}$ d'eau aspirée en aval du filtre,

dans lequel le filtre rotatif comporte au moins un cylindre :

- de rayon donné $R_F$ ,
- mis en rotation autour d'un axe donné de hauteur $N_{axe}$ par rapport à une référence donnée,
- et de largeur donnée $L_F$, définie parallèlement à son axe de rotation,

**caractérisé en ce que**, la perte de charge étant définie par une différence entre les niveaux d'eau en amont $N_{amont}$ et en aval *Naval* du filtre, l'évolution temporelle de la perte de charge est déduite de l'évolution temporelle du niveau d'eau en aval du filtre, donnée par :

$$\frac{dN_{aval}}{dt} = \frac{Q_{filtre} - Q_{aspiré}}{2R_F L_F \sqrt{1 - \left(\dfrac{N_{axe} - N_{aval}}{R_F}\right)^2}}$$

avec :

- $N_{aval}$ , un niveau d'eau en aval du filtre, mesuré ou déduit de la mesure du débit $Q_{aspiré}$ d'eau aspirée en aval du filtre ;
- $N_{axe}$ , le niveau en hauteur de l'axe de rotation du filtre, déterminé relativement à une même référence que le niveau $N_{aval}$ d'eau en aval du filtre,
- $Q_{filtre}$ , un débit d'eau à travers le filtre,

Le débit d'eau à travers le filtre $Q_{filtre}$ étant calculé au moins en fonction du niveau d'eau en amont du filtre $N_{amont}$ déterminé relativement à la même référence que le niveau $N_{aval}$ d'eau en aval du filtre, pour:

$$\frac{(N_{amont} - N_{aval})}{L_F} > 0{,}65$$

comme suit :

$$Q_{filtre} = 2L_F R_F Arc\cos\left(\frac{N_{axe} - N_{amont}}{R_F}\right) \sqrt{\frac{2g(N_{amont} - N_{aval})}{k_{Re}\left(1{,}3(1 - f_1) + (\frac{1}{f_1} - 1)^2\right)}} + 0{,}6f_1\, S_{em} \sqrt{2g(N_{amont} - N_{aval})}$$

où :

- g est la constante gravitationnelle,
- $f_1$ est la porosité du filtre partiellement colmaté et correspond au rapport du volume libre d'eau dans le filtre sur le volume total du filtre,
- $S_{em}$ correspond à la section du filtre émergée et s'exprime par :

$$S_{em} = L_F R_F (\alpha_{Namont} - \alpha_{Naval})$$

où

$$\alpha_{Namont} = 2 Arc \cos\left(\frac{N_{axe} - N_{amont}}{R_F}\right) \text{ et } \alpha_{Naval} = 2 Arc \cos\left(\frac{N_{axe} - N_{aval}}{R_F}\right)$$

- $k_{Re} = 1 + 0{,}7e^{-0{,}0106 \, Re}$ pour Re<400 et $k_{Re}$ = 1 pour Re>400, Re étant le nombre de Reynolds d'écoulement dans le filtre,

Et **en ce que** ledit filtre, mis en œuvre dans l'installation, est choisi selon ses dimensions de largeur $L_F$ et de rayon $R_F$ en fonction de besoins de l'installation en débit d'eau aspirée, et en anticipation par l'évolution temporelle de la perte de charge d'un colmatage du filtre par les impuretés du milieu naturel.

2. Procédé selon la revendication 1, **caractérisé en ce que** le rapport $f_1$ est donné par $f_1 = f_0(1 - T_{c1})$, $f_0$ étant une constante relative à la porosité du filtre propre, et $T_{c1}$ étant un taux de colmatage du filtre à un instant courant.

3. Procédé selon l'une des revendications 1 et 2, dans lequel le filtre comporte un tamis à fils croisés, **caractérisé en ce que** le nombre de Reynolds est donné par :

$$\text{Re} = \frac{V_{am}\delta}{\nu} \text{ avec } \delta = a_0 + \delta_0 - a_0\sqrt{1 - T_{c1}}$$

Où:

- $\delta_0$ étant le diamètre de fil du filtre, propre sans impureté,
- $a_0$ étant la taille de la maille de filtre,
- $V_{am}$ étant la vitesse de l'eau en amont du filtre, et
- $T_{c1}$ étant un taux de colmatage du filtre à un instant courant,
- $\nu$ est la viscosité cinématique de l'eau, ayant pour valeur 0,000001 m2/s à une température de 25°C.

4. Procédé selon la revendication 3, **caractérisé en ce que** la vitesse de l'eau en amont du filtre est calculée par :

$$V_{am} = \sqrt{\frac{2g(N_{amont} - N_{aval})}{\xi}}$$ avec $\xi$ un coefficient de perte de charge du filtre.

5. Procédé selon la revendication 4, **caractérisé en ce que** $\xi$ est le coefficient de perte de charge de la section immergée du filtre, donné par une corrélation d'Idel'cik adaptée à un grillage fin, et s'exprime par :

$$\xi = k_{Re}\left(1{,}3(1 - f_1) + \left(\frac{1}{f_1} - 1\right)^2\right)$$

6. Procédé selon l'une des revendications précédentes, **caractérisé en ce que** l'évolution temporelle de la perte de charge est fonction d'au moins un taux de colmatage du filtre à un instant courant et de la dérivée temporelle de ce taux de colmatage, et **en ce que** le procédé comporte une étape de résolution d'au moins une équation différentielle associée à ce taux de colmatage et faisant intervenir lesdites données relatives au milieu naturel.

7. Procédé selon la revendication 6, dans lequel le filtre rotatif comporte une ou plusieurs buses de lavage en au moins un point donné d'impact de jet d'eau sur la périphérie interne du filtre, **caractérisé en ce que** le taux de colmatage du filtre rotatif est déterminé pour trois types de partie distinctes du filtre :

- Une première partie du filtre immergée dans l'eau et en contact avec les impuretés, sur une surface de contact $S_0$ correspondant à toute la périphérie immergée du filtre, avec un premier taux de colmatage $T_{c1}$,
- Une deuxième partie du filtre, émergée et qui s'étend sur une surface périphérique allant au maximum jusqu'à l'impact des buses de lavage, notée $S_{bal}$-$S_0$, avec $S_{bal} \leq S_{\alpha lav}$, $S_{\alpha lav}$ étant une surface périphérique de la partie émergée du filtre jusqu'à l'impact des buses, cette deuxième partie correspondant à un deuxième taux de colmatage $T_{c2}$,
- Une troisième partie du filtre, émergée et complémentaire de la deuxième partie, définie par Smax - $S_{bal}$, Smax étant la surface périphérique totale du filtre, cette troisième partie correspondant à un troisième taux de colmatage $T_{c3}$.

**8.** Procédé selon la revendication 7, **caractérisé en ce que** les premier, deuxième et troisième taux de colmatage sont reliés par les équations différentielles :

$$\boxed{S_0 \frac{dT_{c1}}{dt} = \frac{CQ_{filtre}}{P} + (T_{c3} - T_{c1})L_F V_F}$$

$$\boxed{(S_{bal} - S_0)\frac{dT_{c2}}{dt} = \left(T_{c1} - \left(1 + \frac{1}{L_F V_F}\frac{dS_{bal}}{dt}\right)T_{c2}\right)L_F V_F}$$

$$\boxed{(S_{bal} - S_{\alpha lav})\frac{dT_{c3}}{dt} = \left((1 - r_{lav})T_{c2} - (1 + \frac{1}{L_F V_F}\frac{dS_{bal}}{dt})T_{c3}\right)L_F V_F}$$

Où :

- C est une concentration mesurée dans le milieu naturel en impuretés colmatantes,
- $P$ est un pouvoir colmatant propre à l'espèce desdites impuretés colmatantes,
- $L_F$ est la largueur du filtre, définie parallèlement à son axe de rotation,
- $Q_{filtre}$ est un débit d'eau à travers le filtre,
- $V_F$ est la vitesse de rotation du filtre, fonction de seuils de perte de charge,
- $r_{lav}$ est un rendement de lavage du filtre par les buses, correspondant à une donnée mesuré ou statistique.

**9.** Procédé selon la revendication 8, **caractérisé en ce que**, pour un filtre rotatif de type tambour, de rayon donné $R_F$, mis en rotation autour d'un axe donné de hauteur $N_{axe}$ par rapport à une référence donnée, et de largeur donnée $L_F$, définie parallèlement à son axe de rotation :

- la surface immergée $S_0$ est donnée par :

$$S_{am} = R_F \times L_F \times \alpha_{Namont}, \text{ avec } \alpha_{Namont} = 2Arc\cos\left(\frac{N_{axe} - N_{amont}}{R_F}\right)$$

- la surface périphérique totale du filtre $S_{max} = 2 \times \pi \times R_F \times L_F$
- la surface périphérique de la partie émergée allant jusqu'à l'impact des buses de lavage est donnée par :

$$S\alpha_{lav} = S_{max} \times \left(\frac{1}{4} + \frac{\alpha_{Namont}}{4\pi} + \frac{\alpha_{lav}}{360}\right),$$

où :

- $\alpha_{lav}$ est une valeur d'angle intrinsèque au filtre et fonction de la position d'impact des buses,

- $N_{axe}$ , le niveau en hauteur de l'axe de rotation du filtre, déterminé relativement à une même référence que le niveau $N_{amont}$ d'eau en amont du filtre.

**10.** Procédé selon la revendication 8, **caractérisé en ce que**, pour un filtre rotatif de type filtre à chaine comportant un cylindre rotatif supérieur et un cylindre rotatif inférieur reliés par une chaine :

- la surface immergée $S_0$ est donnée par
$$S_{am} = \left( \pi R_F + 2 \frac{N_{amont} - N_{axe}}{\cos \alpha_F} \right) L_F$$
, si $N_{amont} > N_{axe}$ et par

$$S_{am} = 2 L_F R_F \, Arc \, \cos \left( \frac{N_{axe} - N_{amont}}{R_F} \right)$$
si $N_{amont} < N_{axe}$

- et, sans tenir compte d'un impact de buses de lavage éventuelles, la section de filtre émergée $S_{max} - S_0$ est donnée par :

$$S_{em} = \frac{2 L_F (N_{amont} - N_{aval})}{\cos \alpha_F}) \text{ avec } N_{axe} < N_{aval} \text{ et } N_{amont} < N_{Fsup},$$

Où:

- $R_{Fsup}$ le rayon du cylindre supérieur,
- $N_{Fsup}$ le niveau de l'axe de rotation supérieur, et
- $\alpha_F$ l'inclinaison de la surface filtrante par rapport à la verticale,
- $N_{aval}$ , un niveau d'eau en aval du filtre, mesuré ou déduit de la mesure du débit $Q_{aspiré}$ d'eau aspirée en aval du filtre ;
- $N_{axe}$ , le niveau en hauteur de l'axe de rotation du filtre, déterminé relativement à une même référence que le niveau $N_{aval}$ d'eau en aval du filtre.

**11.** Procédé selon l'une des revendications 8 à 10, prise en combinaison avec la revendication 2, **caractérisé en ce que** le débit d'eau à travers le filtre $Q_{filtre}$ est calculé en fonction d'un taux de colmatage du filtre correspondant audit premier taux de colmatage Tc1 dans ladite première partie du filtre.

**12.** Procédé selon l'une des revendications précédentes, **caractérisé en ce que** le filtre rotatif est mis en rotation à une vitesse variable en fonction d'une perte de charge estimée par anticipation, donnée par le calcul de ladite évolution temporelle de la perte de charge, pour un filtre de caractéristiques et de dimensions données.

**13.** Procédé selon l'une des revendications précédentes, **caractérisé en ce que** le débit d'eau aspirée en aval du filtre, pour les besoins de l'installation de pompage, est estimé par anticipation, à partir du calcul de ladite évolution temporelle de la perte de charge, pour un filtre de caractéristiques et de dimensions données.

**14.** Dispositif comportant un circuit de traitement pour mettre en œuvre le procédé selon l'une des revendications précédentes.

**15.** Programme informatique **caractérisé en ce qu'**il comporte des instructions pour la mise en œuvre du procédé selon l'une des revendications 1 à 13, lorsque ce programme est exécuté par un processeur.

**Patentansprüche**

**1.** Verfahren zum Betreiben einer Anlage zum Pumpen von Wasser aus einer natürlichen Umgebung, das Verunreinigungen enthalten kann, wobei die Anlage dazu bestimmt ist, wenigstens einen Rotationsfilter in Betrieb zu nehmen, um das gepumpte Wasser zu reinigen, während wenigstens ein Teil der Verunreinigungen den Rotationsfilter zumindest teilweise verschließt,

wobei das Verfahren **dadurch gekennzeichnet ist, dass** es eine Schätzung der zeitlichen Entwicklung eines Druckverlustes umfasst, der durch den Verschluss des Rotationsfilters durch die Verunreinigungen verursacht wird, ausgehend von wenigstens:

- Daten zur natürlichen Umgebung,
- Abmessungen des Rotationsfilters, und
- lokalen Messungen in Bezug auf wenigstens einen Wasserstand $N_{amont}$ stromaufwärts des Filters und eine Durchflussmenge $Q_{aspiré}$ des Wassers, das stromabwärts des Filters angesaugt wird,

wobei der Rotationsfilter wenigstens einen Zylinder umfasst:

- mit einem gegebenen Radius $R_F$,
- der um eine gegebene Achse der Höhe $N_{axe}$ in Bezug auf eine gegebene Referenz gedreht wird,
- und mit einer gegebenen Breite $L_F$, die parallel zu seiner Rotationsachse definiert ist,

**dadurch gekennzeichnet, dass**, da der Druckverlust durch eine Differenz zwischen den Wasserständen stromaufwärts $N_{amont}$ und stromabwärts $N_{aval}$ des Filters definiert ist, die zeitliche Entwicklung des Druckverlustes aus der zeitlichen Entwicklung des Wasserstandes stromabwärts des Filters abgeleitet wird, die gegeben ist durch:

$$\frac{dN_{aval}}{dt} = \frac{Q_{filtre} - Q_{aspiré}}{2R_F L_F \sqrt{1 - \left(\dfrac{N_{axe} - N_{aval}}{R_F}\right)^2}}$$

wobei:

- $N_{aval}$ ein Wasserstand stromabwärts des Filters ist, der gemessen oder aus der Messung des Durchflusses $Q_{aspiré}$ des stromabwärts des Filters angesaugten Wassers abgeleitet wird;
- $N_{axe}$ der Stand in der Höhe der Rotationsachse des Filters ist, der in Bezug auf die gleiche Referenz wie der Wasserstand $N_{aval}$ stromabwärts des Filters bestimmt wird,
- $Q_{filter}$ eine Wassermenge ist, die durch den Filter fließt,

wobei der Wasserdurchfluss durch den Filter $Q_{filter}$ wenigstens in Abhängigkeit vom Wasserstand stromaufwärts des Filters $N_{amont}$ berechnet wird, der in Bezug auf die gleiche Referenz bestimmt wird wie der Wasserstand stromabwärts des Filters $N_{aval}$, für:

$$\frac{(N_{amont} - N_{aval})}{L_F} > 0{,}65$$

wie folgt:

$$Q_{filtre} = 2L_F R_F \, Arc\cos\left(\frac{N_{axe} - N_{amont}}{R_F}\right)\sqrt{\frac{2g(N_{amont} - N_{aval})}{k_{Re}\left(1{,}3(1-f_1) + (\frac{1}{f_1} - 1)^2\right)}} + 0{,}6f_1 \, S_{em}\sqrt{2g(N_{amont} - N_{aval})}$$

wobei:

- g die Gravitationskonstante ist,
- $f_1$ die Porosität des teilweise verschlossenen Filters ist und dem Verhältnis des freien Wasservolumens im Filter zum Gesamtvolumen des Filters entspricht,
- $S_{em}$ dem hinaus ragenden Filterquerschnitt entspricht und ausgedrückt wird durch:

$$S_{em} = L_F R_F (\alpha_{Namont} - \alpha_{Naval})$$

où

$$\alpha_{Namont} = 2 Arc \cos\left(\frac{N_{axe} - N_{amont}}{R_F}\right) et \; \alpha_{Naval} = 2 Arc \cos\left(\frac{N_{axe} - N_{aval}}{R_F}\right)$$

- $k_{Re}$ = 1 + 0,7e$^{-0,0106 Re}$ für Re<400 und $k_{Re}$=1 für Re>400, wobei Re die Reynolds-Zahl der Strömung im Filter ist,

und dass der Filter, der in der Anlage eingesetzt wird, nach seinen Abmessungen der Breite $L_F$ und des Radius $R_F$ abhängig vom Bedarf der Anlage an angesaugtem Wasserdurchfluss und in Antizipation des Druckverlustes eines Verschlusses des Filters durch die Verunreinigungen der natürlichen Umgebung durch die zeitliche Entwicklung gewählt wird.

2. Verfahren nach Anspruch 1, **dadurch gekennzeichnet, dass** das Verhältnis $f_1$ durch $f_1=f_0(1-T_{c1})$ gegeben ist, wobei foeine Konstante bezüglich der Porosität des sauberen Filters ist und $T_{c1}$ ein Verschlussgrad des Filters zu einem aktuellen Zeitpunkt ist.

3. Verfahren nach einem der Ansprüche 1 und 2, wobei der Filter ein Kreuzdrahtsieb umfasst, **dadurch gekennzeichnet, dass** die Reynolds-Zahl gegeben ist durch:

$$Re = \frac{V_{am}\delta}{\nu} \; avec \; \delta = a_0 + \delta_0 - a_0\sqrt{1-T_{c1}}$$

wobei:

- $\delta_0$ der Drahtdurchmesser des Filters ist, der sauber ohne Verunreinigungen ist,
- $a_0$ die Größe der Filtermasche ist,
- $V_{am}$ die Wassergeschwindigkeit stromaufwärts des Filters ist, und
- $T_{C1}$ ein Verschlussgrad des Filters zu einem aktuellen Zeitpunkt ist,
- $v$ die kinematische Viskosität des Wassers mit dem Wert 0,000001 m$^2$/s bei einer Temperatur von 25 °C ist.

4. Verfahren nach Anspruch 3, **dadurch gekennzeichnet, dass** die Geschwindigkeit des Wassers stromaufwärts des

$$V_{am} = \sqrt{\frac{2g(N_{amont} - N_{aval})}{\xi}}$$

Filters berechnet wird, durch: , mit $\xi$ als einem Druckverlustkoeffizienten des Filters.

5. Verfahren nach Anspruch 4, **dadurch gekennzeichnet, dass** $\xi$ der Druckverlustkoeffizient des eingetauchten Abschnitts des Filters ist, der durch eine an ein feines Gitter angepasste Idel'cik-Korrelation gegeben ist und ausgedrückt wird durch:

$$\xi = k_{Re}\left(1{,}3(1-f_1) + (\frac{1}{f_1}-1)^2\right)$$

6. Verfahren nach einem der vorhergehenden Ansprüche, **dadurch gekennzeichnet, dass** die zeitliche Entwicklung des Druckverlusts abhängig von wenigstens einem Verschlussgrad des Filters zu einem aktuellen Zeitpunkt und von der zeitlichen Ableitung dieses Verschlussgrades ist, und dass das Verfahren einen Schritt zur Lösung wenigstens einer mit diesem Verschlussgrad verbundenen Differentialgleichung umfasst, wobei die Daten bezüglich der natürlichen Umgebung einbezogen werden.

7. Verfahren nach Anspruch 6, wobei der Rotationsfilter eine oder mehrere Waschdüsen an wenigstens einem gegebenen Punkt des Wasserstrahlauftreffens auf den Innenumfang des Filters aufweist, **dadurch gekennzeichnet, dass** der Verschlussgrad des Rotationsfilters für drei verschiedene Arten von Filterteilen bestimmt wird:

   - einen ersten Teil des Filters, der in das Wasser eingetaucht ist und mit den Verunreinigungen über eine Kontaktfläche $S_0$ in Kontakt steht, die dem gesamten eingetauchten Umfang des Filters entspricht, mit einem ersten Verschlussgrad $T_{c1}$,
   - einen zweiten Teil des Filters, der aus dem Wasser ragt und sich über eine Umfangsfläche erstreckt, die maximal bis zum Auftreffen der Waschdüsen reicht und mit $S_{bal}$-$S_0$ bezeichnet wird, wobei $S_{bal} \leq S_{\alpha lav}$ ist, wobei $S_{\alpha lav}$ eine Umfangsfläche des aus dem Wasser ragenden Teils des Filters bis zum Auftreffen der Düsen ist, wobei dieser zweite Teil einem zweiten Verschlussgrad $T_{c2}$ entspricht,
   - einen dritten Teil des Filters, der hinaus ragt und komplementär zum zweiten Teil ist, definiert durch $S_{max}$-$S_{bal}$, wobei Smax die gesamte Umfangsfläche des Filters ist, wobei dieser dritte Teil einem dritten Verschlussgrad $T_{c3}$ entspricht.

8. Verfahren nach Anspruch 7, **dadurch gekennzeichnet, dass** der erste, zweite und dritte Verschlussgrad durch die folgenden Differentialgleichungen verknüpft sind:

$$S_0 \frac{dT_{c1}}{dt} = \frac{CQ_{filtre}}{P} + (T_{c3} - T_{c1})L_F V_F$$

$$(S_{bal} - S_0)\frac{dT_{c2}}{dt} = \left( T_{c1} - \left(1 + \frac{1}{L_F V_F}\frac{dS_{bal}}{dt}\right)T_{c2} \right)L_F V_F$$

$$(S_{bal} - S_{\alpha lav})\frac{dT_{c3}}{dt} = \left( (1 - r_{lav})T_{c2} - (1 + \frac{1}{L_F V_F}\frac{dS_{bal}}{dt})T_{c3} \right)L_F V_F$$

wobei:

   - *C* eine in der natürlichen Umgebung gemessene Konzentration an verschließenden Verunreinigungen ist,
   - *P* ein artspezifisches Verschlusspotenzial der genannten verschließenden Verunreinigungen ist,
   - $L_F$ die Breite des Filters ist, die parallel zu seiner Rotationsachse definiert wird,
   - $Q_{filtre}$ eine Wassermenge ist, die durch den Filter fließt,
   - $V_F$ die Drehgeschwindigkeit des Filters ist, die von den Schwellenwerten für den Druckverlust abhängt,
   - $r_{lav}$ ein Wirkungsgrad der Filterspülung durch die Düsen ist, der einem gemessenen oder statistischen Wert entspricht.

9. Verfahren nach Anspruch 8, **dadurch gekennzeichnet, dass** für einen trommelartigen Rotationsfilter mit einem gegebenen Radius $R_F$, der um eine gegebene Achse mit der Höhe $N_{axe}$ in Bezug auf eine gegebene Referenz und der gegebenen Breite $L_F$, die parallel zu seiner Rotationsachse definiert ist, in Rotation versetzt wird:

   - die eingetauchte Fläche $S_0$ ist gegeben durch:

$$S_{am} = R_F \times L_F \times \alpha_{Namont} \text{ , avec } \alpha_{Namont} = 2Arccos\left(\frac{N_{axe} - N_{amont}}{R_F}\right)$$

   - die gesamte Umfangsfläche des Filters Smax =$2 \times \pi \times R_F \times L_F$,
   - die Umfangsfläche des hinaus ragenden Teils, der bis zum Auftreffen der Waschdüsen reicht, ist gegeben durch:

$$S\alpha_{lav} = S_{max} \times \left(\frac{1}{4} + \frac{\alpha_{Namont}}{4\pi} + \frac{\alpha_{lav}}{360}\right),$$

wobei:

- $\alpha_{lav}$ ein filterinterner Winkelwert ist, der von der Auftreffposition der Düsen abhängt,
- $N_{axe}$ der Höhenstand der Rotationsachse des Filters ist, die in Bezug auf die gleiche Referenz wie der Wasserstand $N_{amont}$ oberhalb des Filters bestimmt wird.

**10.** Verfahren nach Anspruch 8, **dadurch gekennzeichnet, dass** bei einem Rotationsfilter vom Kettenfiltertyp mit einem durch eine Kette verbundenen oberen Rotationszylinder und unteren Rotationszylinder:

- die eingetauchte Fläche $S_0$ gegeben ist, durch

$$S_{am} = \left(\pi R_F + 2\frac{N_{amont} - N_{axe}}{\cos \alpha_F}\right)L_F,$$

wenn

$$N_{amont} > N_{axe}$$

und durch

$$S_{am} = 2L_F R_F Arc \cos\left(\frac{N_{axe} - N_{amont}}{R_F}\right),$$

wenn

$$N_{amont} < N_{axe}$$

- und ohne Berücksichtigung eines Auftreffens von möglichen Waschdüsen der hinaus ragende Filterquerschnitt $S_{max}$-$S_0$ gegeben ist, durch:

$$S_{em} = \frac{2L_F(N_{amont} - N_{aval})}{\cos \alpha_F}) \text{ avec } N_{axe} < N_{aval} \text{ et } N_{amont} < N_{Fsup},$$

wobei:

- $R_{Fsup}$ der Radius des oberen Zylinders ist,
- $N_{Fsup}$ der Stand der oberen Rotationsachse ist, und
- $\alpha_F$ die Neigung der Filterfläche in Bezug auf die Vertikale ist,
- $N_{aval}$ ein Wasserstand stromabwärts des Filters ist, gemessen oder abgeleitet aus der Messung des Durchflusses $Q_{aspiré}$ des stromabwärts des Filters angesaugten Wassers;
- $N_{axe}$ der Höhenstand der Rotationsachse des Filters ist, der in Bezug auf eine gleiche Referenz wie der Wasserstand $N_{aval}$ stromabwärts des Filters bestimmt wird.

**11.** Verfahren nach einem der Ansprüche 8 bis 10 in Verbindung mit Anspruch 2, **dadurch gekennzeichnet, dass** der Wasserdurchfluss durch den Filter $Q_{filtre}$ abhängig vom Filterverschlussgrad berechnet wird, der dem ersten Verschlussgrad $T_{c1}$ in dem ersten Teil des Filters entspricht.

**12.** Verfahren nach einem der vorhergehenden Ansprüche, **dadurch gekennzeichnet, dass** der Rotationsfilter mit einer variablen Geschwindigkeit als Funktion eines vorausgeschätzten Druckverlusts in Rotation versetzt wird, der durch die Berechnung der zeitlichen Entwicklung des Druckverlustes für einen Filter mit gegebenen Eigenschaften und Abmessungen ermittelt wird.

13. Verfahren nach einem der vorhergehenden Ansprüche, **dadurch gekennzeichnet, dass** die Menge des stromabwärts des Filters zum Zweck der Pumpinstallation angesaugten Wassers basierend auf der Berechnung der zeitlichen Entwicklung des Druckverlustes für einen Filter mit gegebenen Eigenschaften und Abmessungen vorausgeschätzt wird.

14. Vorrichtung, umfassend eine Verarbeitungsschaltung zur Durchführung des Verfahrens nach einem der vorhergehenden Ansprüche.

15. Computerprogramm, **dadurch gekennzeichnet, dass** es Anweisungen zur Durchführung des Verfahrens nach einem der Ansprüche 1 bis 13 umfasst, wenn dieses Programm von einem Prozessor ausgeführt wird.

**Claims**

1. Method for managing a facility for pumping water originating from a natural environment likely to contain impurities, the facility being intended to make use of at least one rotary filter to purify the pumped water while at least some of the impurities are at least partially clogging the rotary filter,

the method being **characterized in that** it comprises an estimation of an evolution over time of a pressure loss caused by the clogging of the rotary filter by impurities, based at least on:

- data relating to the natural environment,
- dimensions of the rotary filter, and
- local measurements relating to at least one water level $N_{amont}$ upstream of the filter, and to a flow rate $Q_{aspiré}$ of water drawn in downstream of the filter,

wherein the rotary filter comprises at least one cylinder:

- of given radius $R_F$ ,
- rotated about a given axis of height $N_{axe}$ relative to a given reference,
- and of given width $L_F$, defined parallel to its axis of rotation,

**characterized in that**, the pressure loss being defined by a difference between the water levels upstream $N_{amont}$ and downstream *Naval* of the filter, the evolution over time of the pressure loss is deduced from the evolution over time of the water level downstream of the filter, given by:

$$\frac{dN_{aval}}{dt} = \frac{Q_{filtre} - Q_{aspiré}}{2R_F L_F \sqrt{1 - \left(\dfrac{N_{axe} - N_{aval}}{R_F}\right)^2}}$$

with:

- $N_{aval}$, a water level downstream of the filter, measured or deduced from the measurement of the flow rate $Q_{aspiré}$ of water drawn in downstream of the filter;
- $N_{axe}$, the height level of the axis of rotation of the filter, determined relative to a same reference as the water level $N_{aval}$ downstream of the filter,
- $Q_{filtre}$, a flow rate of water through the filter,

the flow rate of water through the filter $Q_{filtre}$ being calculated at least as a function of the water level upstream of the filter $N_{amont}$ determined relative to the same reference as the water level $N_{aval}$ downstream of the filter, for:

$$\frac{(N_{amont} - N_{aval})}{L_F} > 0,65$$

as follows:

$$Q_{filtre} = 2 L_F R_F Arc \cos\left(\frac{N_{axe} - N_{amont}}{R_F}\right) \sqrt{\frac{2g(N_{amont} - N_{aval})}{k_{Re}\left(1,3(1 - f_1) + (\frac{1}{f_1} - 1)^2\right)}} + 0,6f_1 \, S_{em} \sqrt{2g(N_{amont} - N_{aval})}$$

where:

- g is the gravitational constant,
- $f_1$ is the porosity of the partially clogged filter and corresponds to the ratio of the void volume for water in the filter to the total volume of the filter,
- $S_{em}$ corresponds to the section of the non-submerged filter and is expressed by:

$$S_{em} = L_F R_F (\alpha_{Namont} - \alpha_{Naval})$$

where

$$\alpha_{Namont} = 2 Arc \cos\left(\frac{N_{axe} - N_{amont}}{R_F}\right) \quad \text{and} \quad \alpha_{Naval} = 2 Arc \cos\left(\frac{N_{axe} - N_{aval}}{R_F}\right)$$

- $k_{Re} = 1 + 0,7e^{-0,0106 \, Re}$ for Re < 400 and $k_{Re} = 1$ for Re > 400, Re being the Reynolds number specific to the filter,

And **in that** said filter, being implemented in said facility, is chosen relatively to its dimensions of width $L_F$ and radius $R_F$ according to the requirements of the facility in terms of the flow rate of drawn-in water, and in anticipation, by the evolution over time of the pressure loss, of the clogging of the rotary filter by impurities from the natural environment.

2. Method according to claim 1, wherein the ratio $f_1$ is given by $f_1 = f_0(1 - T_{c1})$, $f_0$ being a constant relating to the porosity of the clean filter, and $T_{c1}$ being a clogging level of the filter at a current moment.

3. Method according to one of claims 1 and 2, wherein the filter comprises a cross-wire sieve, **characterized in that** the Reynolds number is given by:

$$Re = \frac{V_{am}\delta}{\nu} \quad \text{with} \quad \delta = a_0 + \delta_0 - a_0\sqrt{1 - T_{c1}}$$

where:

- $\delta_0$ is the diameter of the filter wire, clean without impurities,
- $a_0$ is the size of the filter mesh,
- $V_{am}$ is the velocity of the water upstream of the filter, and
- $T_{c1}$ is a clogging level of the filter at a current moment,
- $\nu$ is the kinematic viscosity of water, having the value of 0.000001 m2/s at a temperature of 25°C.

4. Method according to claim 3, wherein the velocity of the water upstream of the filter is calculated by:

$$V_{am} = \sqrt{\frac{2g(N_{amont} - N_{aval})}{\xi}}$$

, with $\xi$ being a pressure loss coefficient of the filter.

5. Method according to claim 4, wherein $\xi$ is the pressure loss coefficient of the submerged section of the filter, given by an Idel'chik correlation adapted to a fine mesh, and is expressed by:

$$\xi = k_{Re}\left(1,3(1-f_1) + (\frac{1}{f_1}-1)^2\right)$$

6. Method according to one of the preceding claims, wherein the evolution over time of the pressure loss is a function of at least one clogging level of the filter at a current moment and of the time derivative of this clogging level, and wherein the method comprises a step of solving at least one differential equation associated with this clogging level and making use of said data relating to the natural environment.

7. Method according to claim 6, wherein the rotary filter comprises one or more nozzles for washing at at least one given point of water jet impact on the internal periphery of the filter, **characterized in that** the clogging level of the rotary filter is determined for three distinct types of filter portions:

- A first portion of the filter, submerged in water and in contact with impurities on a contact surface area $S_0$ corresponding to the entire submerged periphery of the filter, with a first clogging level $T_{c1}$,
- A second portion of the filter, non-submerged and extending over a peripheral surface area extending at most to the impact from the washing nozzles, denoted $S_{bal}-S_0$, with $S_{bal} \leq S_{\alpha lav}$, $S_{\alpha lav}$ being a peripheral surface area of the non-submerged portion of the filter extending to the impact from the nozzles, this second portion corresponding to a second clogging level $T_{c2}$,
- A third portion of the filter, non-submerged and complementary to the second portion, defined by $Smax - S_{bal}$, $Smax$ being the total peripheral surface area of the filter, this third portion corresponding to a third clogging level $T_{c3}$.

8. Method according to claim 7, wherein the first, second, and third clogging levels are linked by the differential equations:

$$S_0 \frac{dT_{c1}}{dt} = \frac{CQ_{filtre}}{P} + (T_{c3} - T_{c1})L_F V_F$$

$$(S_{bal} - S_0)\frac{dT_{c2}}{dt} = \left(T_{c1} - \left(1 + \frac{1}{L_F V_F}\frac{dS_{bal}}{dt}\right)T_{c2}\right)L_F V_F$$

$$(S_{bal} - S_{\alpha lav})\frac{dT_{c3}}{dt} = \left((1-r_{lav})T_{c2} - (1 + \frac{1}{L_F V_F}\frac{dS_{bal}}{dt})T_{c3}\right)L_F V_F$$

where:

- C is a concentration of clogging impurities, measured in the natural environment,
- P is a clogging capacity specific to the type of said clogging impurities,
- $L_F$ is the width of the filter, defined parallel to its axis of rotation,
- $Q_{filtre}$ is a flow rate of water through the filter,
- $V_F$ is the rotation speed of the filter, a function of pressure loss thresholds,
- $r_{lav}$ is a filter washing efficiency by the nozzles, corresponding to measured or statistical data.

9. Method according to claim 8, wherein, for a rotary filter of the drum type, of given radius $R_F$, rotated about a given axis of height $N_{axe}$ relative to a given reference, and of given width $L_F$ defined parallel to its axis of rotation:

   - the submerged surface area $S_0$ is given by:

$$S_{am} = R_F \times L_F \times \alpha_{Namont} \text{ , avec } \alpha_{Namont} = 2Arc\cos\left(\frac{N_{axe} - N_{amont}}{R_F}\right)$$

   - the total peripheral surface area of the filter $S_{max} = 2 \times \pi \times R_F \times L_F$
   - the peripheral surface area of the non-submerged portion extending to the impact from the washing nozzles is given by:

$$S\alpha_{lav} = S_{max} \times \left(\frac{1}{4} + \frac{\alpha_{Namont}}{4\pi} + \frac{\alpha_{lav}}{360}\right),$$

   , where:

   - $\alpha_{lav}$ is an angle value intrinsic to the filter and is a function of the position of the impact from the nozzles,
   - $N_{axe}$, the height level of the axis of rotation of the filter, determined relative to a same reference as the water level $N_{amont}$ upstream of the filter.

10. Method according to claim 8, wherein, for a rotary filter of the chain filter type comprising an upper rotary cylinder and a lower rotary cylinder which are connected by a chain:

   - the submerged surface area $S_0$ is given by $S_{am} = \left(\pi R_F + 2\frac{N_{amont} - N_{axe}}{\cos\alpha_F}\right)L_F$ , if $N_{amont} > N_{axe}$ and by

$$S_{am} = 2L_F R_F Arc\cos\left(\frac{N_{axe} - N_{amont}}{R_F}\right)$$ if $N_{amont} < N_{axe}$

   - and, without taking into account an impact from any washing nozzles, the section of the non-submerged filter $S_{max}$-$S_0$ is given by:

$$S_{em} = \frac{2L_F(N_{amont} - N_{aval})}{\cos\alpha_F})$$

   with $N_{axe} < N_{aval}$ and $N_{amont} < N_{Fsup}$, where:

   - $R_{Fsup}$ the radius of the upper cylinder,
   - $N_{Fsup}$ the level of the upper axis of rotation, and
   - $\alpha_F$ the incline of the filtering surface relative to the vertical,
   - $N_{aval}$ , a water level downstream of the filter, measured or deduced from the measurement of the flow rate $Q_{aspiré}$ of water drawn in downstream of the filter;
   - $N_{axe}$, the height level of the axis of rotation of the filter, determined relative to a same reference as the water level $N_{aval}$ downstream of the filter.

11. Method according to one of claims 8 to 10, in combination with claim 4, wherein the flow rate of water through the filter $Q_{filtre}$ is calculated as a function of a clogging level of the filter corresponding to said first clogging level Tcl in said first portion of the filter.

12. Method according to one of the preceding claims, wherein the rotary filter is rotated at a variable speed as a function of an estimated anticipated pressure loss, given by the calculation of said evolution over time of the pressure loss, for a filter of given properties and dimensions.

**13.** Method according to one of the preceding claims, wherein the flow rate of water drawn in downstream of the filter, for the requirements of the pumping facility, is estimated in advance from the calculation of said evolution over time of the pressure loss, for a filter of given properties and dimensions.

**14.** Device comprising a processing circuit for implementing the method according to one of the preceding claims.

**15.** Computer program, **characterized in that** it comprises instructions for implementing the method according to one of claims 1 to 13, when this program is executed by a processor.

**FIG. 1**

FIG. 2A

FIG. 2B

FIG. 2C

FIG. 3A

FIG. 3B

FIG. 3C

PARAM F:
$R_F$, $L_F$, $N_{axe}$, $a0$,
$\delta 0$, $\alpha_{lav}$, $rlav$ — S0

PARAM SITE:
$C$ ; $P$ — S1

MES → PARAM ENT:
$V_F(t)$, $Q_{asp}(t)$, $N_{amont}$, — S2

VAR F:
$S_{max}$; $S_0$; $S_{\alpha lav}$ — S3

INIT — S4

$S_{bal}$ — S5

S6 — SYST dTc

$Q_{filtre}$ — S7

$\dfrac{dN_{aval}}{dt}$ — S8

# FIG. 4

DIS

MES → IN → PROC ↔ OUT → AL, RECO

MEM

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9915255 A1
- WO 2017186603 A1
- US 2013118991 A1
- FR 2960161 A1